# DEMANDE DE BREVET EUROPEEN

(11) **EP 4 060 216 A1**
(43) Date de publication de la demande: **21.09.2022**
(21) Numéro de dépôt: 22161765.7
(22) Date de dépôt: 14.03.2022
(51) Int. Cl.: F16L 37/00, F16L 55/115, F24H 9/13

(54) **RACCORD DE CHAUFFE-EAU**

(30) Priorité: 17.03.2021 FR 2102683
(71) Demandeur: DPLOMBIERS, 83700 Saint-Raphaël (FR)
(72) Inventeur: DANOJEVIC, Michaël, 83700 Saint-Raphaël (FR)
(74) Mandataire: Hautier IP - MC/EP

(57) **Abrégé**

L'invention concerne un raccord pour embouchure (71) en un matériau magnétique d'un chauffe-eau, comprenant un support (11) et un joint (12), le joint (12) comprenant une portion de contact et le support (11) comprenant une première extrémité, la première extrémité étant configurée de sorte à être en appui contre la portion de contact au moins dans une configuration de coopération avec l'embouchure (71) dans laquelle le joint (12) est intercalé entre la première extrémité et l' embouchure (71), le support (11) comprenant un aimant (15) configuré pour maintenir le joint (12) contre l'embouchure (71) dans la configuration de coopération.

## Description

### DOMAINE TECHNIQUE DE L'INVENTION

La présente invention concerne le domaine des raccords pour chauffe-eau. Elle trouve pour application particulièrement avantageuse le domaine de la plomberie. Elle pourra également s'appliquer à la maintenance des chauffe-eaux.

### ETAT DE LA TECHNIQUE

Un groupe de sécurité a pour fonction de préserver le ballon d'eau chaude des surpressions, mais il permet également de vidanger le réservoir du chauffe-eau et ce notamment lorsque l'on souhaite remplacer le chauffe-eau. De nombreux professionnels de la plomberie sont confrontés à un problème lorsqu'il s'agit d'effectuer un remplacement d'un groupe de sécurité ou une vidange du réservoir du chauffe-eau. En effet, il arrive fréquemment qu'au fil du temps, les groupes de sécurité se remplissent de tartre et finissent par devenir inopérants. Cela peut avoir des conséquences très gênantes, comme une surpression dans le ballon pouvant provoquer des fissures ou des fuites au niveau du réservoir du chauffe-eau.

Par ailleurs, il faut quelquefois remplacer le groupe de sécurité du chauffe-eau sans remplacer le chauffe-eau. Afin de pouvoir changer un groupe de sécurité d'un chauffe-eau, il peut être judicieux de de procéder dans un premier temps à la vidange de celui-ci. Celle-ci peut généralement s'effectuer via le groupe de sécurité. Cependant, si celui-ci est entartré, il convient alors de le retirer puis de reboucher l'embouchure à laquelle il était vissé le temps de pouvoir procéder à son nettoyage.

Il est important de procéder à ce rebouchage afin d'éviter que de l'eau chaude ne s'écoule par terre. Dans le domaine des chauffe-eaux, il n'existe que très peu d'outils spécifiques à ce type d'intervention. Généralement les professionnels s'adaptent grâce à des astuces peu confortables. Prenons l'exemple de celle consistant à l'utilisation d'un bouchon en laiton femelle 3/4 que l'on visse sur le filetage de l'embouchure du chauffe-eau destinée au groupe de sécurité.

Cette solution n'est pas toujours viable car elle nécessite un vissage du bouchon sur l'embouchure alors que de l'eau à haute température est susceptible d'y couler. Ce type de solution technique peut avoir comme conséquence malheureuse d'entraîner des brûlures pour le technicien lors de la maintenance si le bouchon n'a pas été vissé suffisamment rapidement. Par ailleurs, ce type de solution ne permet pas de maintenir fermée l'embouchure destinée au groupe de sécurité d'un chauffe-eau tout en garantissant un accès à la partie filetée de l'embouchure afin de pouvoir appliquer de la filasse avec de la pâte à joint, ou encore du mastic pour assurer l'étanchéité du raccord.

Un objet de la présente invention est donc de proposer une solution qui permette de supprimer ou de limiter au moins l'un des inconvénients précités.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation on prévoit un raccord pour embouchure en un matériau magnétique d'un chauffe-eau, comprenant un support et un joint, le joint comprenant une portion de contact et le support comprenant une première extrémité, la première extrémité étant configurée de sorte à être en appui contre la portion de contact au moins dans une configuration de coopération avec l'embouchure dans laquelle le joint est intercalé entre la première extrémité et l' embouchure, le support comprenant un aimant configuré pour maintenir le joint contre l'embouchure dans la configuration de coopération.

Sans la présente invention, il faudrait venir obstruer l'orifice du chauffe-eau en venant par exemple visser un bouchon au niveau de l'embouchure et le temps nécessaire pour visser un bouchon au niveau d'un orifice pourrait laisser couler davantage d'eau brûlante.

Ainsi la présente invention permet dans un premier temps d'éviter un écoulement d'eau chaude depuis le chauffe-eau lorsque le groupe de sécurité est retiré et dans un second temps, cette solution technique permet de garantir un accès facilité à la partie filetée de l'embouchure afin éventuellement de pouvoir appliquer de la filasse avec de la pâte à joint ou encore du mastic pour assurer l'étanchéité d'un nouveau raccord.

Par ailleurs cette solution technique permet d'éviter les brûlures pour le technicien lors de la maintenance, notamment lorsque le bouchon n'est pas entièrement vissé correctement ou que la manipulation n'a pas pu être effectuée suffisamment rapidement.

En effet, l'aimant permet une mise en position immédiate et un maintien en position du raccord sur l'embouchure. La présente invention permet donc préférentiellement d'obstruer la sortie de l'embouchure d'un chauffe-eau de manière intuitive et immédiate.

De manière facultative le raccord permet également de faire circuler l'eau dans un flexible de vidange afin de permettre la vidange du chauffe-eau.

Selon un mode de réalisation, l'invention comprend un système comprenant un raccord à une embouchure et présentant une portion radiale filetée, le joint étant configuré pour coopérer avec l'embouchure sans recouvrir la portion radiale.

De manière facultative, le système peut en outre présenter au moins la caractéristique suivante : l'embouchure est configurée pour permettre un raccordement vissé du groupe de sécurité sur le chauffe-eau.

Un autre aspect concerne un chauffe-eau comprenant un système et/ou un raccord tel qu'indiqué précédemment. Avantageusement, le chauffe-eau comporte un volume intérieur de stockage d'eau et des moyens de chauffage de cette eau. Avantageusement, le chauffe-eau comporte un tuyau d'admission d'eau froide et un tuyau de délivrance d'eau chaude. Un système et/ou un raccord peut être utilisé en combinaison avec le tuyau d'admission d'eau froide. Selon un mode de réalisation, l'invention comprend un procédé de montage d'un raccord sur une embouchure en un matériau magnétique d'un chauffe-eau, le raccord comprenant un support et un joint, le joint comprenant une portion de contact et le support comprenant une première extrémité et un aimant, le procédé comprenant une étape d'appui de la première extrémité contre la portion de contact de sorte que le joint soit intercalé entre la première extrémité et l'embouchure, et que l'aimant maintienne le joint contre l'embouchure.

De manière facultative, le procédé peut en outre présenter la caractéristique suivante : l'étape d'appui de la première extrémité contre la portion de contact est suivie d'une étape d'application de filasse et/ou de pâte à joint sur l'embouchure.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1A représente un chauffe-eau ainsi qu'un groupe de sécurité coopérant avec l'embouchure du chauffe-eau prévu à cet effet.
La figure 1B représente le chauffe-eau sans que le groupe de sécurité ne coopère avec à l'embouchure du chauffe-eau prévu à cet effet.
La figure 2A représente une vue zoomée et schématique du chauffe-eau et de l'embouchure avec le raccord de la présente invention dans la première configuration de coopération.
La figure 2B est une vue zoomée et schématique du chauffe-eau et de l'embouchure avec le raccord dans la deuxième configuration de coopération.
La figure 3 représente une coopération de l'aimant avec le support selon un mode de réalisation de la présente invention.
Les figures 4A à 4C représentent les différentes vues du support selon un mode de réalisation particulier.
Les figures 5A à 5C représentent l'aimant selon un mode de réalisation de la présente invention.
La figure 6 représente une vue éclatée du raccord selon la présente invention dans une première configuration de coopération.
Les figures 7A à 7C représentent un joint selon un mode de réalisation particulier de la présente invention correspondant à la première configuration de coopération.
La figure 8A représente un système comprenant le raccord et l'embouchure du chauffe-eau dans la première configuration de coopération.
La figure 8B représente une vue en coupe du système de la figure 8A.
La figure 9 représente une vue éclatée du raccord selon la présente invention dans une deuxième configuration de coopération.
Les figures 10A à 10C représentent un joint selon un mode de réalisation particulier de la présente invention correspondant à la deuxième configuration de coopération.
La figure 11A représente un système comprenant le raccord et l'embouchure du chauffe-eau dans la deuxième configuration de coopération.
La figure 11B représente une vue en coupe du système de la figure 11A.
Les figures 12A à 12E représentent des vues d'un adaptateur correspondant à la deuxième configuration de coopération.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, dans la configuration de coopération, la portion de contact 120 est configurée pour obstruer entièrement une sortie 711 de l'embouchure 71.

Selon un exemple, dans la configuration de coopération, la portion de contact 120 n'obstrue pas entièrement une sortie 711 de l'embouchure 71.

Selon un exemple, l'aimant 15 et le joint 12 coopèrent par contact plan sur plan dans la configuration de coopération.

Selon un exemple, la portion de contact 120 comprend deux surfaces parallèlement opposées, une première surface de contact 121 configurée pour coopérer avec l'embouchure 71 dans la configuration de coopération 501 et une deuxième surface de contact 122 comprenant un relief 123, le relief 123 étant reçu dans un alésage cylindrique 151 de l'aimant 15.

Selon un exemple, la portion de contact 120 comprend une première surface de contact 121 plane surmontée d'une couronne 124 circulaire, la couronne 124 étant configurée pour permettre une coopération avec une portion radiale 712 de l'embouchure 71

Selon un exemple, le support 11 comprend une cavité d'accueil 112 dans laquelle l'aimant 15 est monté serré.

Selon un exemple, le joint 12 est amovible relativement au support 11.

Selon un exemple, le raccord 1 comprend un joint additionnel 12' présentant une portion de contact 120, la portion de contact 120 comprenant une ouverture circulaire 125, et dans une deuxième configuration de coopération 502 du raccord 1 avec l'embouchure 71, la première extrémité 111 est configurée de sorte à être en appui contre la portion de contact 120 afin que la portion de contact 120 soit intercalée entre la première extrémité 111 et l'embouchure 71 et sans obstruer entièrement une sortie 711 de l'embouchure 71.

Selon un exemple, le support 11 comprend une deuxième extrémité 113 distincte de la première extrémité 111 et configurée de sorte à pouvoir coopérer par emmanchement avec un flexible de vidange 9.

Selon un exemple, le système comprend un raccord 1 une embouchure 71 présentant une portion radiale 712 filetée, le joint 12 étant configuré pour coopérer avec l'embouchure 71 sans recouvrir la portion radiale 712.

Dans la présente invention, on entendra par « aimant », tout objet fabriqué dans un matériau magnétique dur et présentant des propriétés particulières liées à l'existence du champ magnétique, comme celle d'exercer une force d'attraction sur tout matériau magnétique, de préférence sur tous les matériaux ferromagnétiques.

Il est précisé que, dans le cadre de la présente invention, les termes « sur », « surmonte », « recouvre », « sous-jacent », en « vis-à-vis » et leurs équivalents ne signifient pas forcément « au contact de ».

Dans la description qui suit, sauf indication contraire, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", "latéral"...etc., il est fait référence à l'orientation des figures correspondantes, étant entendu que, dans la pratique, les dispositifs et assemblages décrits peuvent être orientés différemment.

Les termes « sensiblement », « environ », « de l'ordre de » signifient « à 10% près, de préférence à 5% près ».

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Dans le cadre de la présente demande de brevet, l'expression « intercalé cinématiquement entre » ne signifie pas nécessairement pas au « contact de ». Ainsi, si une pièce A est intercalée cinématiquement entre une pièce B et une pièce C, cela ne signifie pas que A et B sont nécessairement en contact direct ou que A et C sont nécessairement en contact direct. Cela signifie qu'un mouvement ou qu'un effort de la pièce B, respectivement de la pièce C, peut-être au moins en partie transmis à la pièce C, respectivement à la pièce B, par l'intermédiaire de la pièce A.

Dans la présente demande de brevet, lorsque l'on indique que deux pièces sont distinctes, cela signifie que ces pièces sont séparées. Elles sont positionnées à distance l'une de l'autre, et/ou mobiles l'une par rapport à l'autre et/ou solidaires l'une de l'autre en étant fixées par des éléments rapportés, cette fixation étant démontable ou non.

Une pièce unitaire monobloc ne peut donc pas être constituée de deux pièces distinctes.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre sauf selon la direction X. Autrement dit, si on déplace une pièce selon la direction X, l'autre pièce effectue le même déplacement.

### APPROCHE PRELIMINAIRE

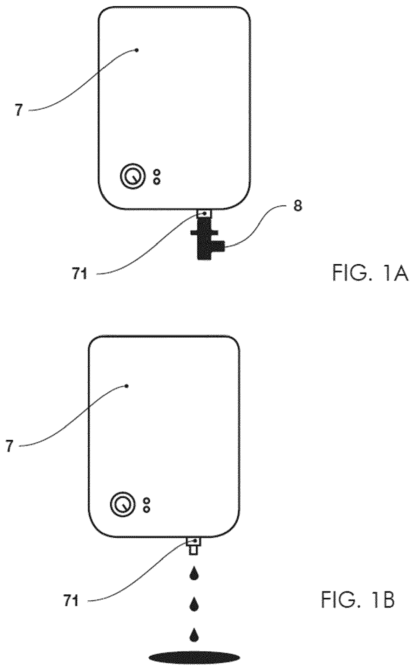

Comme illustré à la figure 1A, un chauffe-eau comprend généralement une embouchure 71 à laquelle peut venir se raccorder un groupe de sécurité 8.

Au fil du temps, le chauffe-eau 7 a généralement tendance à dysfonctionner, si bien qu'il est fréquent de devoir le remplacer ou d'intervenir dans son volume interne. Afin d'y procéder, il convient dans un premier temps de le vider de toute son eau, puisque rempli, sa masse peut atteindre plusieurs dizaines de kilogrammes et sa maintenance devient alors très complexe. Un des moyens les plus simples pour effectuer la vidange d'un chauffe-eau 7 est de le faire directement via le groupe de sécurité 8. En effet, le groupe de sécurité 8 comprend un orifice de vidange avec une ouverture manuelle qui permet de contrôler l'écoulement de l'eau. Néanmoins, il arrive que le groupe de sécurité 8 soit entartré et par conséquent ne permettent pas une vidange optimisée puisque le tartre bouche l'orifice de vidange et par conséquent, l'eau ne s'écoule qu'au goutte à goutte ce qui rend la durée de l'opération de vidange très longue. Pour cette raison, un technicien de maintenance ou un professionnel de la plomberie peut être amené à vouloir enlever le groupe de sécurité 8 afin de le remplacer par un nouveau groupe de sécurité 8 et enfin procéder à l'étape de vidange.

Comme illustré à la figure 1B, lorsque l'on enlève le groupe de sécurité 8 et que le chauffe-eau 7 est encore plein, alors, il peut se produire des fuites d'eau chaude sur le sol

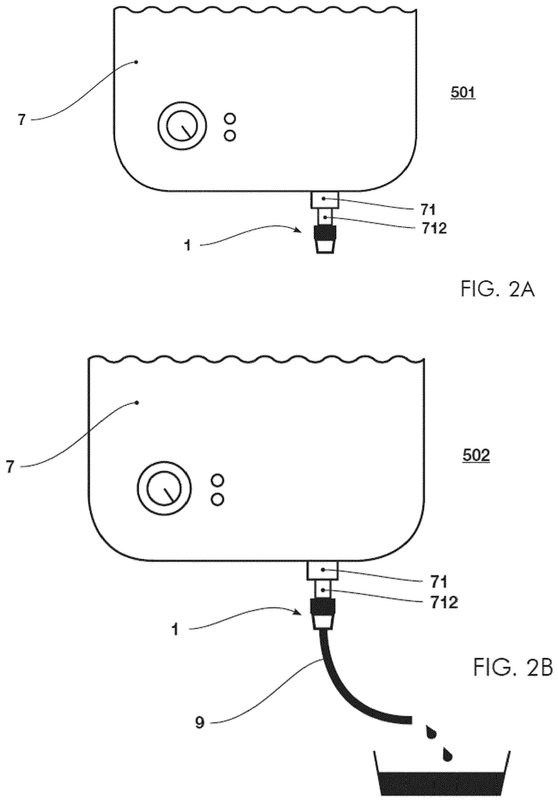

Comme illustré à la figure 2A, et selon un mode de réalisation particulier de la présente invention, un raccord 1 peut-être positionné de sorte à coopérer avec de l'embouchure 71 afin d'arrêter tout écoulement d'eau. Avantageusement, l'embouchure 71 permet le raccordement d'un groupe de sécurité 8.

Comme illustré à la figure 2B selon un autre mode de réalisation particulier, le raccord 1 peut-être positionné de sorte à coopérer avec l'embouchure 71 du chauffe-eau 7 et le raccord 1 est préférentiellement configuré pour permettre la connexion d'un flexible de vidange 9 afin de permettre la vidange du chauffe-eau 7 via le raccord 1.

### APPROCHE STRUCTURELLE SUPPORT /AIMANT

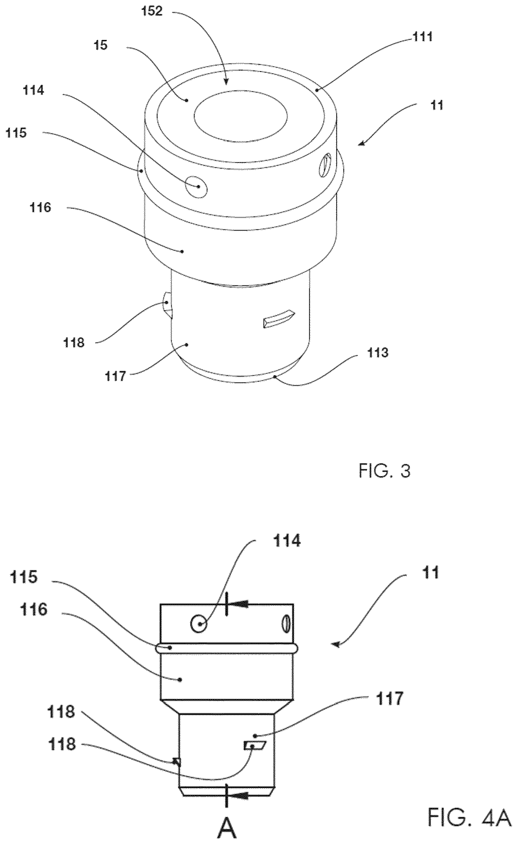

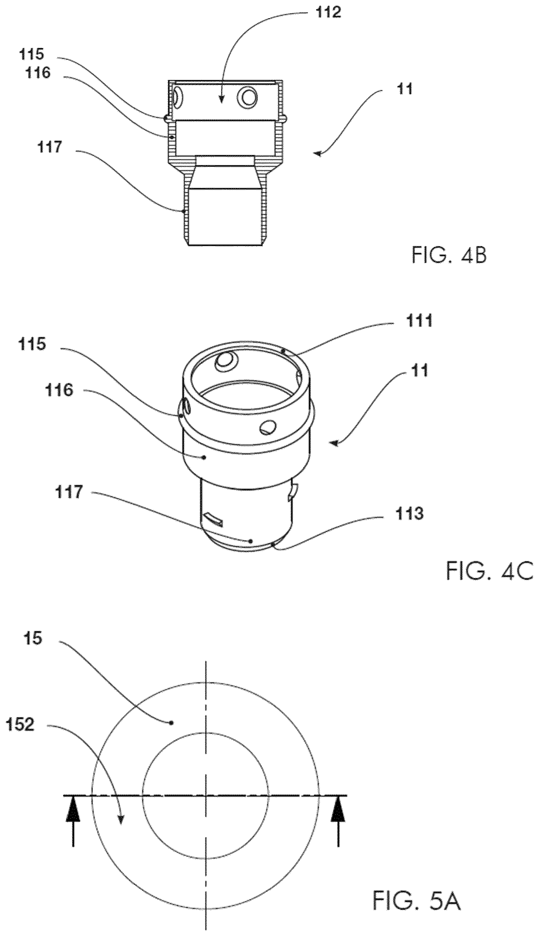

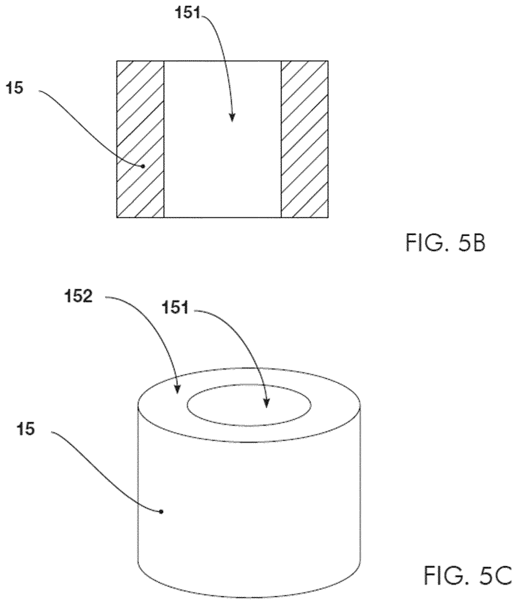

Comme illustré à la figure 3 et aux figures 4A, 4B, 4C, 5A et 5B, et selon un mode de réalisation de la présente invention, le raccord 1 comprend un support 11 et un aimant 15.

Le support 11 comprend une première extrémité 111 et une deuxième extrémité 113 entre lesquelles s'étendent successivement depuis la première extrémité 111, une portion coopérante haute 116 et une portion coopérante basse 117. La portion coopérante haute 116 peut être d'une forme cylindrique dont la section circulaire présente un rayon extérieur haut. La portion coopérante basse 117 peut être d'une forme cylindrique dont la section circulaire présente un rayon extérieur bas. De manière préférée, le rayon extérieur haut est supérieur ou égal au rayon extérieur bas. Avantageusement, le support 11 comprend un bourrelet 115 autour de la portion coopérante haute 116 et de préférence, le bourrelet 115 est réparti de manière homogène autour du support 11. Préférentiellement, le support 11 comprend une saillie 118 autour de la portion coopérante basse 117. La saillie 118 étant configurée de sorte à permettre une retenue du support 11 lors de son emmanchement dans une pièce femelle. De manière préférée, le support 11 comprend une pluralité de saillie 118.

L'aimant 15 est quant à lui configuré de sorte à pouvoir s'insérer dans le support 11 du côté de la première extrémité 111 et de manière préférée, l'aimant 15 et le support 11 coopèrent par emmanchement. Avantageusement, le support 11 comprend une cavité d'accueil 112 et l'aimant 15 est monté au sein de la cavité d'accueil 112. De manière préférée, lorsque l'aimant 15 est inséré dans le support 11, il peut être maintenu en position par des forces de frottements de la surface intérieure de la cavité d'accueil 112 contre sa surface périphérique. L'aimant 15 est de préférence mis en position de sorte à ce que la surface supérieure 152 soit coplanaire avec une face supérieure de la première extrémité 111.

Selon un mode de réalisation, l'aimant 15 est maintenu au fond et/ou à la périphérie de la cavité 112 à l'aide d'une colle.

Selon un mode de réalisation l'aimant 15 est doté d'un trou traversant, de préférence un alésage cylindrique 151. Selon un même mode de réalisation, le support 11 est également doté d'une ouverture de sorte à ce que l'ensemble : aimant 15 monté dans le support 11, dispose d'un trou traversant.

Selon un mode de réalisation, le support 11 comprend un petit évidement 114 apte à permettre un dépôt de colle par injection afin de permettre la solidarisation de l'aimant 15 avec le support 11.

Selon un mode de réalisation particulier, le support 11 peut comprendre également un petit évidement 114 configuré de sorte à pouvoir permettre le retrait de l'aimant 15 une fois monté, dans le cas où celui-ci doit être remplacé. Comme illustré aux figures 5A à 5B, l'aimant 15 est avantageusement un cylindre creux et il peut s'agir d'un aimant néodyme. L'aimant 15 comprenant alors un alésage cylindrique 151 et une surface supérieure 152.

### CONFIGURATIONS DE COOPERATION

Dans la suite de la description, la configuration de coopération comprend deux scénarios distincts, une première configuration de coopération 501 et une deuxième configuration de coopération 502. Ces deux scénarios vont être décrits successivement.

### RACCORD SELON LA PREMIÈRE CONFIGURATION DE COOPÉRATION

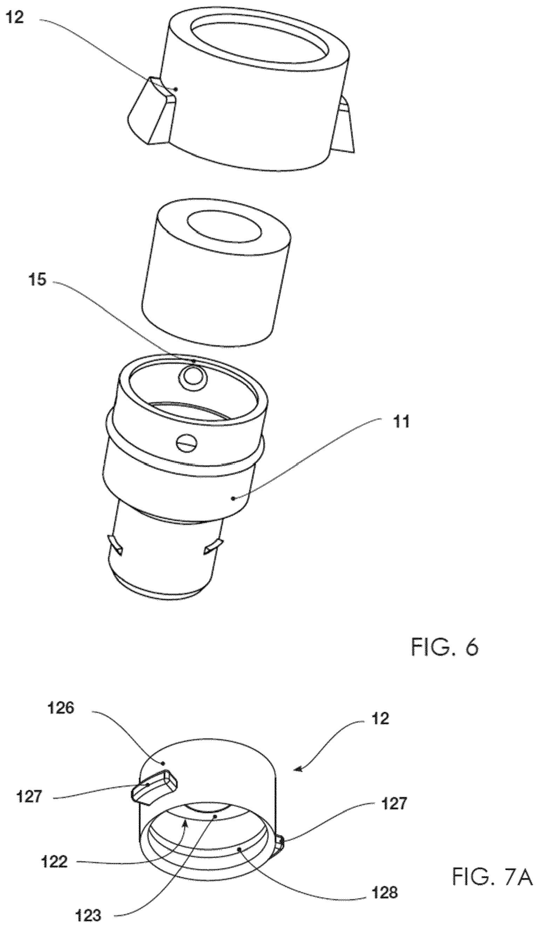

Comme illustré à la figure 6 et selon un mode de réalisation particulier correspondant à une première configuration de coopération 501, le raccord 1 comprend le support 11 et l'aimant 15 qui coopèrent par emmanchement et qui sont surmontés d'un joint 12 configuré pour coopérer à son tour par emmanchement avec la portion coopérante haute 116.

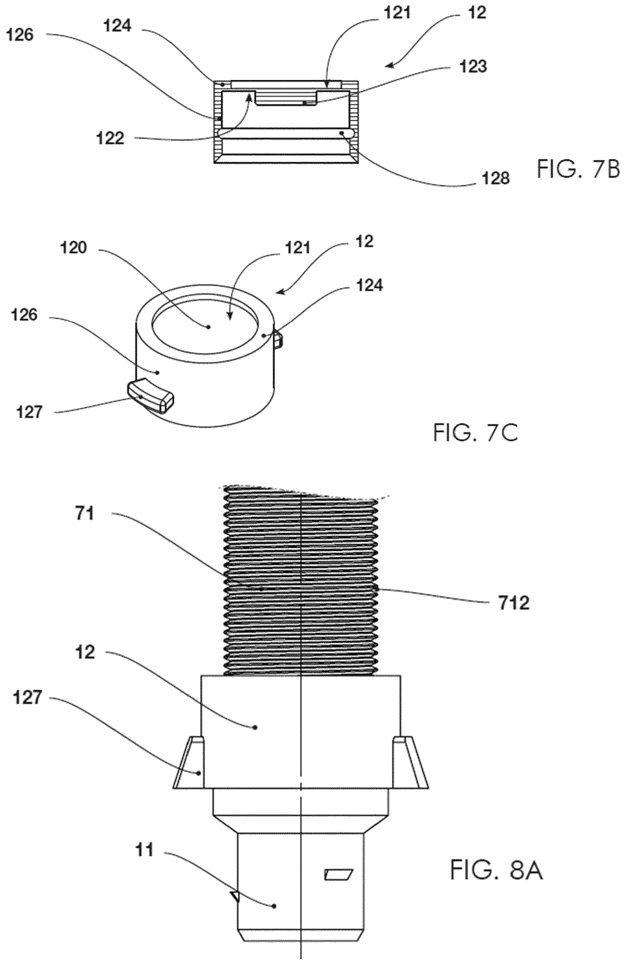

Comme illustré aux figures 7A à 7C et selon un mode de réalisation particulier, le joint 12 comprend une portion de contact 120 qui comprend une première surface de contact 121 et une deuxième surface de contact 122. La première surface de contact 121 et la deuxième surface de contact 122 sont avantageusement réparties de part et d'autre de la portion de contact 120. Avantageusement, la deuxième surface de contact 122 est située à l'intérieur du joint 12 et la première surface de contact 121 est située à l'extérieur du joint 12. Avantageusement, le joint 12 comprend un plan de symétrie, de préférence une pluralité de plans de symétrie. Avantageusement, le joint 12 comprend une portion d'accouplement 126 configurée pour coopérer par emmanchement avec la portion coopérante haute 116. De préférence, dans une configuration de coopération, la portion d'accouplement 126 enveloppe au moins partiellement la portion coopérante haute 116.

Préférentiellement, le joint 12 comprend une poignée 127 configurées de sorte à faciliter l'assemblage et le démontage manuel du joint 12 avec le support 11. De préférence, le joint 12 comprend une pluralité de poignées 127 réparties de manière équiradiales.

Selon un mode de réalisation particulier, le joint 12 présente une section transversale pleine ; autrement dit, le joint 12 ne présente pas de trou débouchant.

### PREMIÈRE CONFIGURATION DE COOPÉRATION

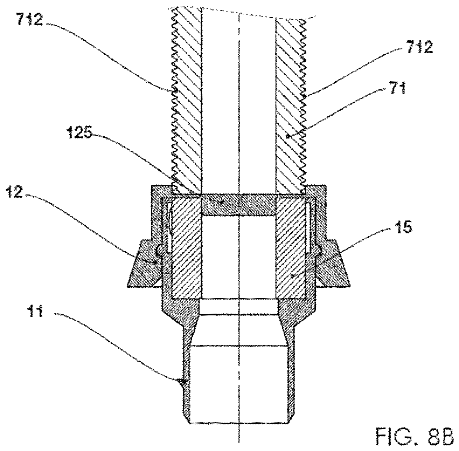

Comme illustré aux figures 8A et 8B, et selon le mode de réalisation correspondant à la première configuration de coopération 501, le raccord 1 est mis en position contre l'embouchure 71 par une force d'attraction magnétique. Ainsi, l'aimant 15 permet de maintenir le raccord 1 en positon sur embouchure 71. Le joint 12 est de ce fait au contact simultané de l'aimant 15 et de l'embouchure 71, de préférence le joint 12 est intercalé entre l'aimant 15 et l'embouchure 71. De manière préférée, la surface supérieure 152 de l'aimant 15 est au contact avec la deuxième surface de contact 122 de sorte à maintenir la première surface de contact 121 contre l'embouchure 71 afin d'empêcher toute fuite d'eau par la sortie 711.

Selon un mode de réalisation particulier, un relief 123 s'étend depuis la deuxième surface de contact 122 à l'intérieur du joint 12 de sorte à pouvoir coopérer avec l'alésage cylindrique 151 de l'aimant 15.

Selon un mode de réalisation particulier, le joint 12 comprend une couronne 124 configurée afin de pouvoir coopérer avec une portion radiale 712 de l'embouchure 71 du chauffe-eau 7.

Selon le même mode de réalisation, la portion radiale 712 comprend un filetage et dans la première configuration, la couronne 124 est configurée de sorte à coopérer avec la portion radiale 712 tout en laissant au moins 60 % du filetage découvert, de préférence au moins 80%, de préférence au moins 90%.

Avantageusement, le maintien en position de l'aimant 15 s'effectue par la coopération entre le support 11 et le joint 12. De préférence, le maintien en position de l'aimant 15 s'effectue par la coopération du bourrelet 115 avec une rainure circulaire 128 portée par le joint 12.

Selon un mode de réalisation, le joint 12 et le support 11 coopèrent par emmanchement et sont maintenus en position par un serrage élastique.

Selon un mode de réalisation particulier, dans la première configuration 501, le raccord 1 est apte à pouvoir recueillir les résidus d'eau pouvant couler lors du remplacement du groupe de sécurité 8.

### RACCORD SELON LA DEUXIEME CONFIGURATION DE COOPÉRATION

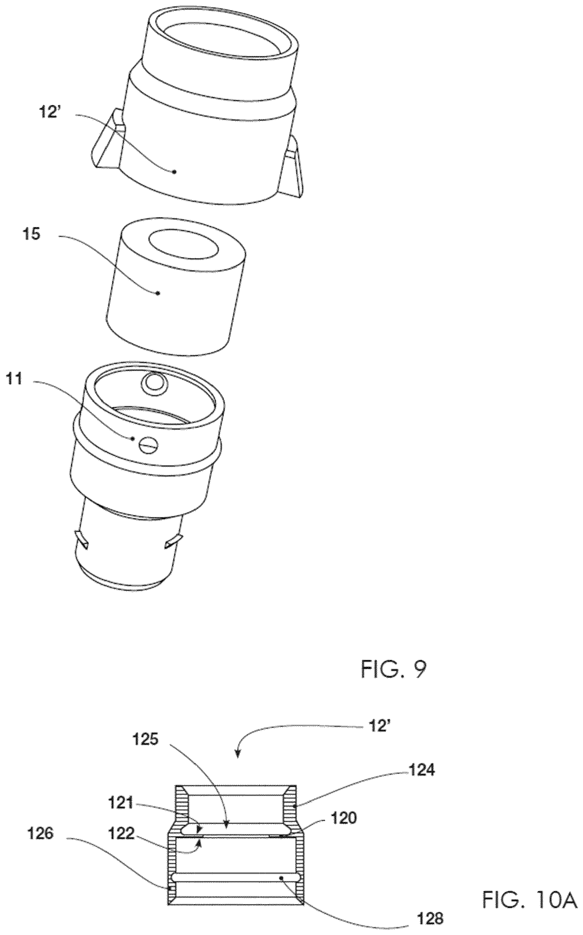

Comme illustré à la figure 9 et selon un mode de réalisation particulier correspondant à une deuxième configuration de coopération 502, le raccord 1 comprend le support 11 et l'aimant 15 qui coopèrent par emmanchement et qui sont surmontés d'un joint additionnel 12' configuré pour coopérer à son tour par emmanchement avec la portion coopérante haute 116.

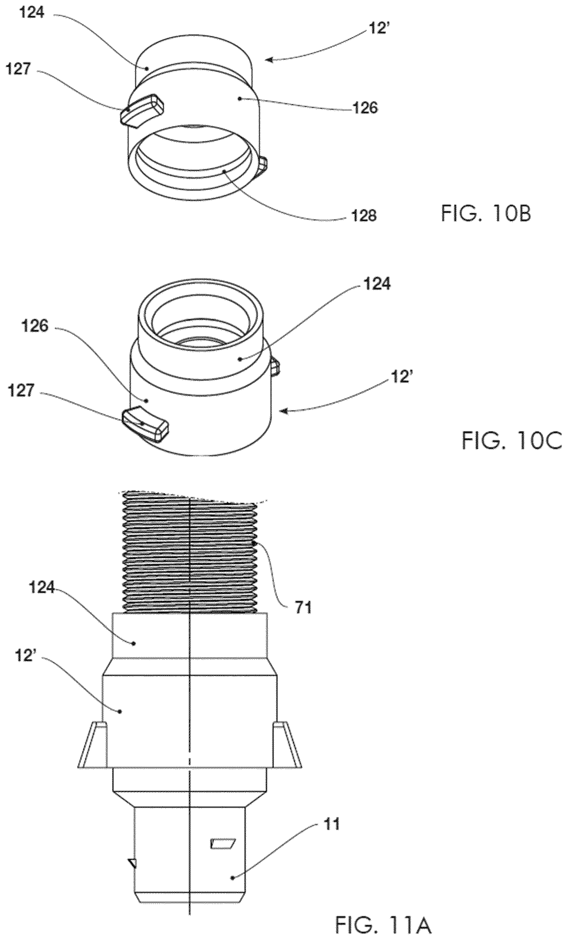

Comme illustré aux figures 10A à 10C et selon un mode de réalisation particulier, le joint additionnel 12' comprend une portion de contact 120 qui comprend une première surface de contact 121 et une deuxième surface de contact 122. La première surface de contact 121 et la deuxième surface de contact 122 sont avantageusement réparties de part et d'autre de la portion de contact 120. Avantageusement, la deuxième surface de contact 122 est située à l'intérieur du joint additionnel 12' et la première surface de contact 121 est située à l'extérieur du joint additionnel 12'. La portion de contact 120 comprend une ouverture circulaire 125. Le joint additionnel 12' peut également comprendre une ouverture circulaire 125, configurée de sorte à permettre un passage de l'eau à l'intérieur du joint 12.

Selon un même mode de réalisation, l'ensemble aimant 15 monté dans le support 11, et joint additionnel 12' monté sur le support, dispose d'un trou traversant.

Avantageusement, le joint additionnel 12' comprend un plan de symétrie et de préférence une pluralité de plans de symétrie.

### DEUXIÈME CONFIGURATION DE COOPÉRATION

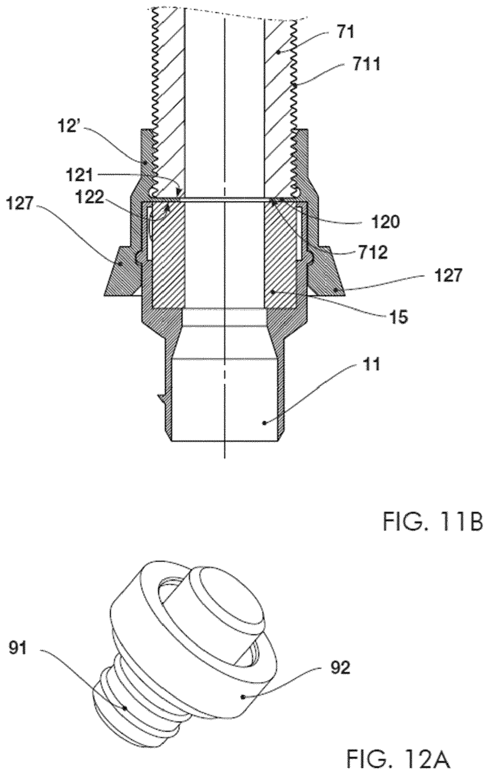

Comme illustré à la figure 11B et selon un mode de réalisation, la portion coopérante haute 116 est configurée de sorte à pouvoir coopérer avec le joint additionnel 12'. De préférence, la portion coopérante haute 116 coopère par emmanchement à l'intérieur du joint additionnel 12'.

De manière préférée, la surface supérieure 152 de l'aimant 15 est au contact avec la deuxième surface de contact 122 du joint additionnel 12' de sorte à maintenir la première surface de contact 121 du joint additionnel 12' contre l'embouchure 71 afin d'empêcher toute fuite d'eau latérales. De manière préférée, la portion coopérante basse 117 est configurée de sorte à pouvoir coopérer par branchement avec le flexible de vidange 9. De préférence, la portion coopérante basse 117 coopère par emmanchement à l'intérieur du flexible de vidange 9.

Dans la deuxième configuration de coopération 502, le joint additionnel 12' est intercalé, entre l'embouchure 71 et l'aimant 15. En effet, par une force d'attraction magnétique, l'aimant 15 permet de maintenir le raccord 1 en positon sur l'embouchure 71. Le joint additionnel 12' est ainsi au contact simultané de l'aimant 15 et de l'embouchure 71.

De manière préférée et selon un mode de réalisation, le raccord 1 comprend un joint additionnel 12' comprenant une ouverture circulaire 125 centrée dans la portion de contact 120.

Selon un mode de réalisation particulier, la portion de contact 120 laisse libre une ouverture circulaire 125 centrée radialement sur une sortie 711 de l'embouchure 71.

De manière préférée, le joint additionnel 12' comporte une ouverture de préférence circulaire, apte à être placée en regard d'une sortie 711 de l'embouchure 71 dans la deuxième configuration de coopération 502.

Selon un mode de réalisation, le support 11 comprend une saillie 118 configurés de sorte à permettre le maintien en position du flexible de vidange 9 avec le raccord 1.

Selon un mode de réalisation, le joint additionnel 12' et le support 11 coopèrent par emmanchement et sont maintenus en position par un serrage élastique.

Selon un mode de réalisation, la couronne 124 est apte à servir de paroi d'étanchéité en complément de la portion de contact 120 lors de la vidange du chauffe-eau. Si l'état de la portion radiale 712 est détérioré, la couronne 124 limite avantageusement la possibilité de déperdition d'eau non désirée puisque la portion de contact 120 peut ne pas permettre à elle seule de boucher entièrement la sortie 711.

### MATÉRIAUX

Selon un mode de réalisation particulier, l'aimant 15 est fait en un matériau magnétique, de préférence il s'agit d'un matériau ferromagnétique comme un aimant néodyme.

Selon un mode de réalisation particulier, le joint 12 et/ ou le joint additionnel 12' sont faits en un matériau élastomère, de préférence il s'agit d'un caoutchouc.

Selon en mode de réalisation particulier, le support 11 est fait en un matériau plastique, de préférence il s'agira d'une pièce moulée et/ ou injectée et/ ou imprimée.

### AUTRES MODES DE REALISATION

Selon un mode de réalisation, l'invention prévoit un ensemble comprenant le raccord 1 doté d'un support 11 et d'un joint 12, et d'un joint additionnel 12'.

Selon un mode de réalisation particulier, le support 11 forme avec le joint 12 ou avec le joint additionnel 12' une pièce monobloc.

Avantageusement, le raccord 1 peut s'adapter aux diamètres des embouchures ¾.

Selon un mode de réalisation particulier, le joint 12 et/ou le joint additionnel 12' sont faits d'un matériau élastique déformable. Avantageusement le joint 12 et/ou le joint additionnel 12' sont configurés de sorte à pouvoir être déformés afin de recouvrir par emmanchement la portion du support 11 configurée pour comprendre l'aimant 15. Cette déformation élastique étant de préférence réversible pour permettre de retirer ou de remplacer l'un des deux joints par l'autre sur le support 11. Ainsi les joints sont amovibles relativement au support 11. Cette amovibilité peut de préférence être mise en œuvre manuellement, sans outil.

Selon un exemple particulier, le joint 12 et le joint additionnel 12' présentent une portion d'emmanchement de forme commune apte à s'emmancher sur un même modèle de support.

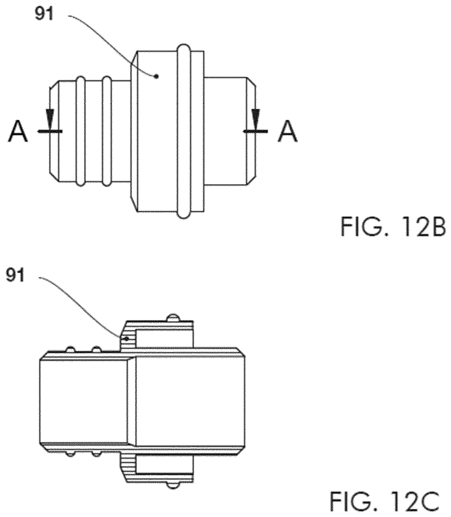

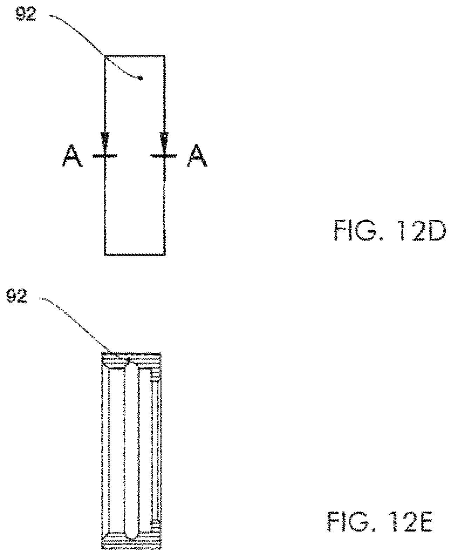

Selon un mode de réalisation, dans la deuxième configuration de coopération 502, le flexible de vidange 9 peut être relié à la portion coopérante basse 117 en sa première embouchure et à un adaptateur 91 avec un joint d'adaptateur 92 tel qu'illustré aux figures 12A à 12D en sa deuxième embouchure.

Selon le même mode de réalisation, le flexible de vidange 9 peut également être remplacé par un tuyau d'arrosage de diamètre 19 mm à partir de l'embout d'adaptation.

Selon un mode de réalisation particulier, pour permettre un confort de transport du raccord 1, une console est configurée pour accueillir le raccord 1 par aimantation. La console étant apte à pouvoir s'aimanter sur une surface métallique avec un autre aimant et/ou un adhésif double face. L'autre aimant est présent pour tenir l'épingle avec sa pièce métallique au dos. Ainsi le flexible de vidange 9 sera rangé ainsi que le reste du système.

### REFERENCES NUMERIQUES

1. raccord
11. support
111. première extrémité
112. cavité d'accueil
113. deuxième extrémité
114. petit évidement
115. bourrelet
116. portion coopérante haute
117. portion coopérante basse
118. saillie
12. joint
120. portion de contact
121. première surface de contact
122. deuxième surface de contact
123. relief
124. couronne
125. ouverture circulaire
126. portion d'accouplement
127. poignée
128. rainure circulaire
12'. joint additionnel
15. aimant
151. alésage cylindrique
152. surface supérieure
7. chauffe-eau
71. embouchure
711. sortie
712. portion radiale
8. groupe de sécurité
9. flexible de vidange
91. adaptateur
92. joint d'adaptateur
500. configuration de coopération
501. première configuration de coopération
502. deuxième configuration de coopération

## Revendications

1. Raccord (1) pour embouchure (71) en un matériau magnétique d'un chauffe-eau (7), comprenant un support (11) et un joint (12), le joint (12) comprenant une portion de contact (120) et le support (11) comprenant une première extrémité (111), la première extrémité (111) étant configurée de sorte à être en appui contre la portion de contact (120) au moins dans une configuration de coopération avec l'embouchure (71) dans laquelle le joint (12) est intercalé entre la première extrémité (111) et l'embouchure (71) dans laquelle le support (11) comprend un aimant (15) configuré pour maintenir le joint (12) contre l'embouchure (71) dans la configuration de coopération, le raccord (1) étant **caractérisé en ce que** le joint (12) est amovible relativement au support (11).

2. Raccord (1) selon la revendication précédente dans lequel, dans la configuration de coopération, la portion de contact (120) est configurée pour obstruer entièrement une sortie (711) de l'embouchure (71).

3. Raccord (1) selon la revendication 1 dans lequel dans la configuration de coopération, la portion de contact (120) n'obstrue pas entièrement une sortie (711) de l'embouchure (71).

4. Raccord (1) selon l'une quelconque des revendications précédentes dans lequel l'aimant (15) et le joint (12) coopèrent par contact plan sur plan dans configuration de coopération.

5. Raccord (1) selon l'une quelconque des revendications précédentes dans lequel la portion de contact (120) comprend deux surfaces parallèlement opposées, une première surface de contact (121) configurée pour coopérer avec l'embouchure (71) dans la configuration de coopération et une deuxième surface de contact (122) comprenant un relief (123), le relief (123) étant reçu dans un alésage cylindrique (151) de l'aimant (15).

6. Raccord (1) selon l'une quelconque des revendications précédentes dans lequel la portion de contact (120) comprend une première surface de contact (121) plane surmontée d'une couronne (124) circulaire, la couronne (124) étant configurée pour permettre une coopération avec une portion radiale (712) de l'embouchure (71).

7. Raccord (1) selon l'une quelconque des revendications précédentes dans lequel le support (11) comprend une cavité d'accueil (112) dans laquelle l'aimant (15) est monté serré.

8. Raccord (1) selon l'une quelconque des revendications précédentes dans lequel le joint (12) est en matériau élastomère.

9. Raccord (1) selon la revendication 2 seule ou en combinaison avec l'une des revendications 4 à 8, comprenant un joint additionnel (12') présentant une deuxième portion de contact (120'), la deuxième portion de contact (120') comprenant une ouverture circulaire (125), et dans une deuxième configuration de coopération (502) du raccord (1) avec l'embouchure (71), la première extrémité (111) est configurée de sorte à être en appui contre la deuxième portion de contact (120') afin que la deuxième portion de contact (120') soit intercalée entre la première extrémité (111) et l'embouchure (71) et sans obstruer entièrement une sortie (711) de l'embouchure (71).

10. Raccord selon l'une quelconque des revendications précédentes dans lequel le support comprend une deuxième extrémité (113) distincte de la première extrémité (111) et configurée de sorte à pouvoir coopérer par emmanchement avec un flexible de vidange (9).

11. Système comprenant un raccord (1) selon l'une quelconque des revendications 1 à 10 et une embouchure (71) présentant une portion radiale (712) filetée, le joint (12) étant configuré pour coopérer avec l'embouchure (71) sans recouvrir la portion radiale (712).

12. Système selon la revendication précédente comprenant un groupe de sécurité (8) et dans lequel l'embouchure (71) est configurée pour permettre un raccordement vissé du groupe de sécurité (8) sur le chauffe-eau (7).

13. Procédé de montage d'un raccord (1) sur une embouchure (71) en un matériau magnétique d'un chauffe-eau (7), le raccord (1) comprenant un support (11) et un joint (12), le joint (12) comprenant une portion de contact (120) et le support (1) comprenant une première extrémité (111) et un aimant (15), le procédé comprenant une étape d'appui de la première extrémité (111) contre la portion de contact (120) de sorte que le joint (12) soit intercalé entre la première extrémité (111) et l'embouchure (71),et que l'aimant (15) maintienne le joint (12) contre l'embouchure (71).

14. Procédé selon la revendication précédente dans lequel, l'étape d'appui de la première extrémité (111) contre la portion de contact (120) est suivie d'une étape d'application de filasse et/ou de pâte à joint sur l'embouchure (71).
